# EUROPÄISCHE PATENTSCHRIFT

(11) **EP 0 921 041 B1**
(45) Veröffentlichungstag und Bekanntmachung des Hinweises auf die Patenterteilung: **09.04.2003**
(21) Anmeldenummer: 98121622.9
(22) Anmeldetag: 12.11.1998
(51) Int. Cl.: B60R 21/00

(54) **Einrichtung zum Ansteuern von elektronischen Geräten in einem Kraftfahrzeug**
Arrangement for controlling electronic devices in a vehicle
Agencement pour la commande des appareils électroniques d'un véhicule

(30) Priorität: 04.12.1997 DE 19753802
(43) Veröffentlichungstag der Anmeldung: 09.06.1999
(73) Patentinhaber: Siemens Aktiengesellschaft, 80333 München (DE)
(72) Erfinder: Berberich, Reinhold, 60439 Frankfurt (DE)

(56) Entgegenhaltungen:
- EP-A- 0 734 921
- EP-B- 0 669 227
- DE-A- 4 005 598
- DE-A- 4 204 996
- GB-A- 2 236 419
- GB-A- 2 289 332
- US-A- 425 329
- US-A- 5 528 698
- US-A- 5 670 853

## Beschreibung

Die Erfindung betrifft eine Einrichtung zum Ansteuern von elektronischen Geräten in einem Kraftfahrzeug mit einem Sensorelement, das als bildaufnehmende Sensoreinheit gestaltet ist, zur Erzeugung von elektronischen Signalen in Abhängigkeit von Positionen von Personen und/oder Gegenständen in einem Innenraum des Kraftfahrzeuges und mit einer Auswerteeinheit, die zur Ermittlung von Bildern der bildaufnehmenden Sensoreinheit ausgebildet ist, zur Auswertung der elektronischen Signale.

Eine solche Einrichtung ist aus der DE-A-42 04 996 zum Ansteuern eines beispielsweise als Kassettenrecorder gestalteten elektronischen Geräts bekannt. Das Sensorelement hat zwei Infrarotsensoren zur Erfassung der Position einer beweglichen Bedieneinrichtung für das elektronische Gerät. Mit den Signalen der Einrichtung sollen Funktionen der Bedieneinrichtung gesperrt werden, wenn sich die Bedieneinrichtung im Bereich des Fahrers des Kraftfahrzeuges befindet.

Darüber hinaus ist eine Einrichtung gemäß dem Oberbegriff von Anspruch 1 aus der US 4 625 329 bekannt. Hier wird eine bildgebende Vorrichtung zur dreidimensionalen Analyse der Position eines Kraftfahrzeuglenkers offengelegt. Zur dreidimensionalen Positionsanalyse werden zwei zweidimensionale Bildsensoren sowie Mittel zur Beleuchtung des Fahrzeuglenkers verwendet. Das vom Fahrzeuglenker reflektierte Licht wird von den zwei Bildsensoren detektiert und nachfolgend dreidimensional ausgewertet.

Solche Einrichtungen werden in der Praxis häufig auch mit einer Diebstahlwarnanlage verbunden, um beispielsweise eine Hupe zu betätigen, wenn jemand durch ein offenes Fenster in das Kraftfahrzeug greift. Bei den meist als Infrarotsensoren ausgebildeten Sensorelementen besteht jedoch insbesondere bei hohen Außentemperaturen die Gefahr von Fehlalarmen der Diebstahlwarnanlage.

Weiterhin sind solche Einrichtungen aus der Praxis zur Ansteuerung eines Airbags bekannt. Hierbei werden druckempfindliche Sensorelemente in Fahrzeugsitzen befestigt, damit die Auslösung des Airbags unterbleiben kann, wenn der entsprechende Fahrzeugsitz unbesetzt ist. Diese druckempfindlichen Sensorelemente können jedoch nicht unterscheiden, ob sich eine Person oder beispielsweise ein Kindersitz oder ein sonstiger Gegenstand auf dem Fahrzeugsitz befindet.

Der Erfindung liegt das Problem zugrunde, eine Einrichtung der eingangs genannten Art so zu gestalten, dass sie Personen und/oder Gegenstände im Innenraum zuverlässig erfasst und die Ansteuerung von unterschiedlichen elektronischen Geräten mit möglichst geringem Aufwand ermöglicht.

Dieses Problem wird erfindungsgemäß dadurch gelöst, dass eine einzige bildaufnehmende Sensoreinheit den Innenraum des Kraftfahrzeuges nahezu vollständig erfasst, wobei die Auswerteeinheit mehrere elektronische Geräte ansteuert und mittels einer Bildverarbeitungseinheit sowohl Personen als auch Gegenstände als solche unterschieden werden und die bildaufnehmende Sensoreinheit zur Anordnung in einem an einem Innenspiegel angrenzenden Bereich vorgesehen ist.

Durch diese Gestaltung wird der Innenraum des Kraftfahrzeuges von der bildaufnehmenden Sensoreinheit optisch erfasst und durch die Auswerteeinheit die Personen und/oder die Gegenstände im Innenraum erkannt. Hierdurch kann die erfindungsgemäße Einrichtung einfach und genau .... ermitteln, ob sich beispielsweise die Bedieneinrichtung im Bereich des Fahrers befindet und ob ein Fahrzeugsitz mit einer Person oder einem Gegenstand belegt ist. Dank der Erfindung kann beispielsweise das Auslösen des mit der erfindungsgemäßen Einrichtung angesteuerten Airbags unterbleiben, wenn der entsprechende Fahrzeugsitz nur mit einem Gegenstand belegt ist oder wenn sich ein Gegenstand auf dem Schoß einer Person befindet. Mit der Auswerteeinheit lassen sich verschiedene Geräte wie beispielsweise Airbag, Diebstahlwarnanlage oder Bedieneinrichtungen im Kraftfahrzeug ansteuern. Weiterhin führen hohe Temperaturen nicht mehr zu fehlerhaften Signalen der erfindungsgemäßen Einrichtung. Durch die Auswerteeinheit lässt sich zudem feststellen, ob sich ein Tier oder ein Mensch im Kraftfahrzeug befindet, so dass sich die Gefahr eines Fehlalarms der mit der erfindungsgemäßen Einrichtung angesteuerten Diebstahlwarnanlage weiter verringern lässt. Da für verschiedene elektronische Geräte nur ein einziges Sensorelement und eine einzige Auswerteeinheit benötigt wird, erfordert die erfindungsgemäße Einrichtung einen besonders geringen baulichen Aufwand.

So können mittels einer Bildverarbeitungseinheit sowohl Personen als auch Gegenstände als solche unterschieden werden und darüber hinaus auch die genaue Position der Personen und/oder Gegenstände bestimmt werden.

Ein Auslösen des Airbags soll in der Regel unterbleiben, wenn die Person nicht ordnungsgemäß auf dem entsprechenden Fahrzeugsitz Platz nimmt. Dies ist beispielsweise dann der Fall, wenn die Person die Beine auf die Armaturentafel des Kraftfahrzeuges legt. Hierbei lässt sich das Auslösen des mit der erfindungsgemäßen Einrichtung angesteuerten Airbags einfach verhindern, wenn die Auswerteeinheit zur Ermittlung der Sitzposition einer Person auf einem Fahrzeugsitz ausgebildet ist.

Ein mehrstufiger Airbag lässt sich mit der erfindungsgemäßen Einrichtung einfach ansteuern, wenn die Auswerteeinheit zur Ermittlung von Größen und/oder Gewichten von Personen ausgebildet ist. Solche mehrstufigen Airbags - häufig als intelligente Airbags bezeichnet - blasen sich in Abhängigkeit von der Größe und des Gewichts der sich auf dem Fahrzeugsitz befindlichen Person unterschiedlich stark auf.

Die erfindungsgemäße Einrichtung ist besonders einfach aufgebaut, wenn die Auswerteeinheit einen elektronischen Speicher für verschiedene Sitzpositionen und für verschiedene Größen und Gewichte der Personen aufweist und zum Vergleich der abgespeicherten Werte mit dem Bild der bildaufnehmenden Sensoreinheit ausgebildet ist.

Die erfindungsgemäße Einrichtung lässt sich besonders einfach in dem Kraftfahrzeug befestigen und mittels kurzer elektrischer Leitungen an die elektronischen Geräte anschließen, wenn die bildaufnehmende Sensoreinheit zur Anordnung im Bereich eines Armaturenbretts des Kraftfahrzeuges vorgesehen ist.

Mit einer einzigen bildaufnehmenden Sensoreinheit lässt sich der Innenraum des Kraftfahrzeuges nahezu vollständig erfassen, wenn die bildaufnehmende Sensoreinheit zur Anordnung in einem an einen Innenspiegel angrenzenden Bereich vorgesehen ist.

Die bildaufnehmende Sensoreinheit führt gemäß einer anderen vorteilhaften Weiterbildung der Erfindung nicht zu einer Einengung des Sichtfeldes des Fahrers, wenn die bildaufnehmende Sensoreinheit zur Anordnung hinter einem halbdurchlässig gestalteten Innenspiegel des Kraftfahrzeuges vorgesehen ist.

Häufig hat der Airbag eine Recheneinheit, die Signale eines Crashsensors verarbeitet und auswertet. Man könnte daran denken, die Signale der Auswerteeinheit der erfindungsgemäßen Einrichtung dieser Recheneinheit zuzuführen. Zur Verringerung der elektronischen Bauteile in dem Kraftfahrzeug trägt es jedoch gemäß einer anderen vorteilhaften Weiterbildung der Erfindung bei, wenn die Auswerteeinheit eine zum Verknüpfen der Signale der bildaufnehmenden Sensoreinheit und eines Crashsensors ausgebildete Recheneinheit aufweist.

Zur weiteren Verringerung der elektronischen Bauteile in dem Kraftfahrzeug trägt es gemäß einer anderen vorteilhaften Weiterbildung der Erfindung bei, wenn die Auswerteeinheit eine zum Verknüpfen der Signale der bildaufnehmende Sensoreinheit und eines Glasbruchsensors und/oder eines Türsensors ausgebildete Recheneinheit aufweist. Durch diese Gestaltung lässt sich die Diebstahlwarnanlage unmittelbar von der erfindungsgemäßen Einrichtung ansteuern.

Die bildaufnehmende Sensoreinheit könnte den Innenraum des Kraftfahrzeuges permanent überwachen. Zur Verringerung des Verbrauchs an elektrischem Strom der erfindungsgemäßen Einrichtung trägt es jedoch bei, wenn die bildaufnehmende Sensoreinheit zur Erzeugung jeweils eines Einzelbildes nach einem vorgesehenen Zeitintervall ausgebildet ist. Das Zeitintervall könnte beispielsweise ein bis zwei Sekunden betragen.

Zur weiteren Verringerung des Verbrauchs an elektrischem Strom durch die erfindungsgemäße Einrichtung trägt es bei, wenn die Auswerteeinheit durch eine Änderung der Signale der bildaufnehmenden Sensoreinheit aktivierbar ist.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine Ansicht von oben in einen Innenraum eines Kraftfahrzeuges mit einer erfindungsgemäßen Einrichtung,
- Fig. 2: einen Signalplan einer weiteren Ausführungsform der erfindungsgemäßen Einrichtung.

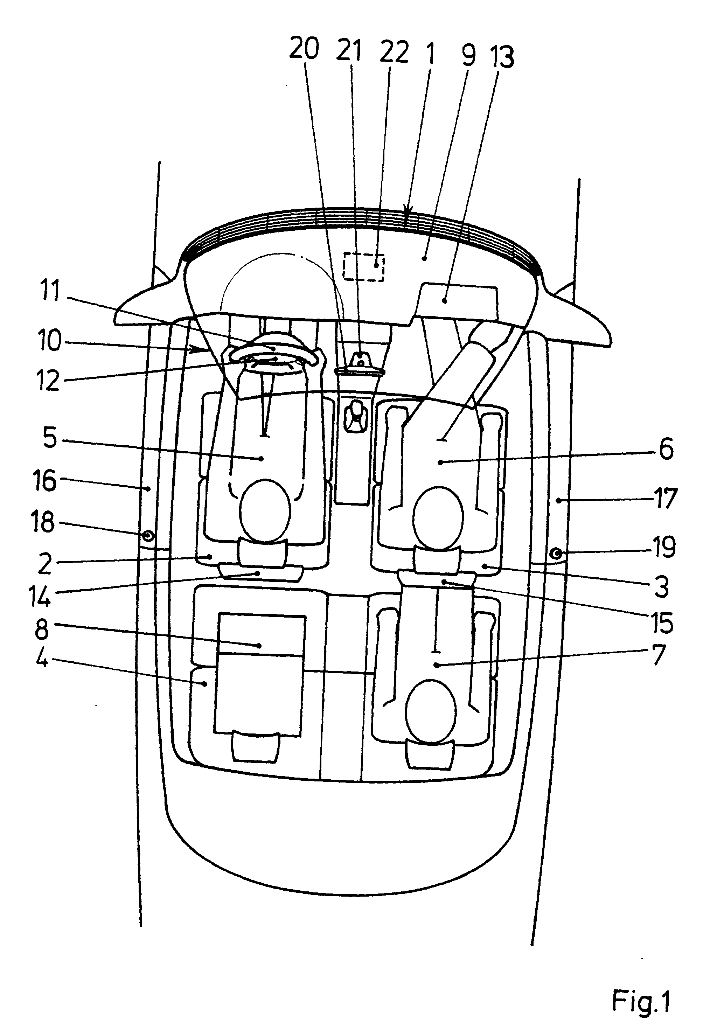

Die Figur 1 zeigt einen Innenraum 1 eines Kraftfahrzeuges von oben mit zwei im vorderen Bereich angeordneten Fahrzeugsitzen 2, 3 und einer Rücksitzbank 4. Die Fahrzeugsitze 2, 3 und die Rücksitzbank 4 sind mit mehreren Personen 5 - 7 und einem Gegenstand 8 belegt. Nach vorne hin wird der Innenraum 1 von einer über einem Armaturenbrett 9 angeordneten Frontscheibe 10 begrenzt. In dem Armaturenbrett 9, einem vor dem Armaturenbrett 9 angeordneten Lenkrad 11 des Kraftfahrzeuges und an der Rückseite der Fahrzeugsitze 2, 3 sind jeweils Airbags 12 - 15 angeordnet. Das Kraftfahrzeug hat Fahrzeugtüren 16, 17, die mit Türsensoren 18, 19 versehen sind und bei geöffneten Fahrzeugtüren 16, 17 elektronische Signale erzeugen. An der Frontscheibe 10 des Kraftfahrzeuges ist ein halbdurchlässiger Innenspiegel 20 befestigt. Hinter dem Innenspiegel 20 ist eine Videokamera 21 zur Erfassung der Personen 5 - 7 und des Gegenstandes 8 angeordnet. An einer nicht sichtbaren Stelle unter dem Armaturenbrett 9 befindet sich eine Auswerteeinheit 22, die mit der Videokamera 21, den Türsensoren 18, 19 und den Airbags 12 - 15 verbunden ist.

Die Auswerteeinheit 22 und die bildaufnehmende Sensoreinheit 21 bilden eine erfindungsgemäße Einrichtung, mit der erfasst wird, ob sich Personen 5 - 7 oder Gegenstände 8 vor den Airbags 12 - 15 befinden. Hierdurch wird ein Auslösen des Airbags 15, vor dem sich keine der Personen befindet, unterbunden. Bei ausgeschalteter Zündung überwacht die Videokamera 21 den Innenraum 1 und steuert eine nicht dargestellte Diebstahlwarnanlage an.

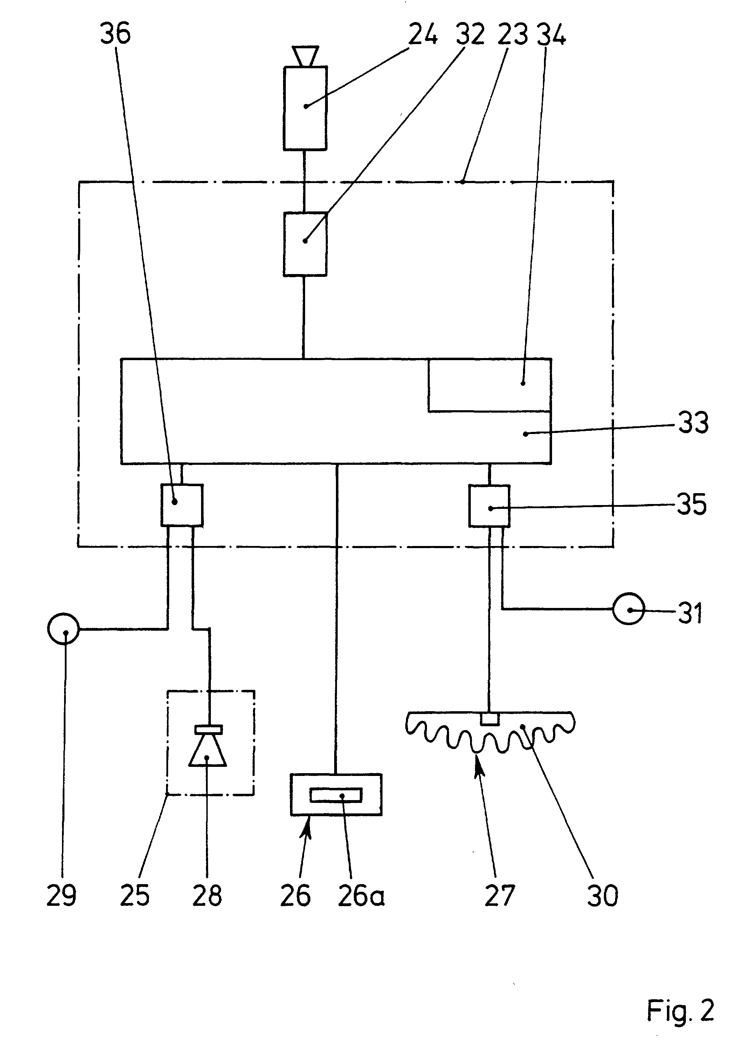

Die Figur 2 zeigt schematisch eine weitere Ausführungsform der erfindungsgemäßen Einrichtung mit einer strichpunktiert dargestellten Auswerteeinheit 23 und einer Videokamera 24. An der Auswerteeinheit 23 sind beispielhaft drei elektronische Geräte 25 - 27 angeschlossen. Eines der Geräte 25 ist als Diebstahl-warnanlage mit einer Hupe 28 und einem Glasbruchsensor 29 ausgebildet. Das zweite Gerät 26 weist einen Kassettenrecorder 26a auf und das dritte Gerät 27 hat einen Airbag 30 mit einem Crashsensor 31. Die bildaufnehmende Sensoreinheit 24 ist mit einer Signalaufbereitung 32 verbunden, die elektronische Signale einer Bildverarbeitung 33 zuführt. In der Bildverarbeitung 33 ist ein elektronischer Speicher 34 mit Daten für Sitzpositionen von in Figur 1 dargestellten Personen 5 - 7 und für Gegenstände angeordnet. Durch einen Vergleich der von der Signalaufbereitung 32 gelieferten Signale mit den im Speicher 34 befindlichen Daten ermittelt die Bildverarbeitung 33, auf welchem der Fahrzeugsitze des Kraftfahrzeuges sich Personen befinden und setzt die Ergebnisse in elektronische Signale um. Diese Signale werden einer Recheneinheit 35 zugeführt, die hiervon und von Signalen des Crashsensors 31 den Airbag 30 ansteuert oder eine Ansteuerung unterbindet.

Weiterhin erfasst die Videokamera 24, von welcher Person der Kassettenrecorder 26a bedient wird. Bei einer Bedienung durch den Fahrer des Kraftfahrzeuges werden die Funktionen des Kassettenrecorders 26a teilweise oder ganz gesperrt. Mit Hilfe dieser Einrichtung kann ein im Kraftfahrzeug vorhandenes Sound-System automatisch der Sitzbelegung angepaßt werden, in dem besispielsweise die Balance entsprechend eingestellt wird. Hierdurch wird vermieden, dass sich der Fahrer durch komplizierte Einstellungen des Kassettenrecorders 26a von dem Verkehrsgeschehen ablenken lässt.

Bei ausgeschalteter Zündung des Kraftfahrzeuges wird der Innenraum von der Videokamera 24 überwacht und die Signale der Bildverarbeitung 33 und die des Glasbruchsensors 29 einer mit der Hupe 28 verbundenen Recheneinheit 36 zugeführt. Hierdurch lässt sich die Hupe 28 ansteuern, wenn entweder der Glasbruchsensor 29 ein nicht dargestelltes zerbrochenes Fenster des Kraftfahrzeuges ermittelt oder wenn durch ein offenes Fenster in das Kraftfahrzeug hineingegriffen wird.

## Patentansprüche

1. Einrichtung zum Ansteuern von elektronischen Geräten in einem Kraftfahrzeug mit einem Sensorelement, das als bildaufnehmende Sensoreinheit gestaltet ist, zur Erzeugung von elektronischen Signalen in Abhängigkeit von Positionen von Personen und/oder Gegenständen in einem Innenraum des Kraftfahrzeuges und mit einer Auswerteeinheit, die zur Ermittlung von Bildern der bildaufnehmenden Sensoreinheit ausgebildet ist, zur Auswertung der elektronischen Signale und die mehrere elektronische Geräte (25 - 27) ansteuert **dadurch gekennzeichnet, dass** eine einzige bildaufnehmende Sensoreinheit (21, 24) den Innenraum des Kraftfahrzeuges nahezu vollständig erfasst, wobei die Auswerteeinheit (22, 23) mittels einer Bildverarbeitungseinheit (33) sowohl Personen als auch Gegenstände als solche unterschieden werden und die bildaufnehmende Sensoreinheit (21, 24) zur Anordnung in einem an einem Innenspiegel (20) angrenzenden Bereich vorgesehen ist.

2. Einrichtung nach Anspruch 1, **dadurch gekennzeichnet, dass** die Auswerteeinheit (22, 23) zur Ermittlung der Sitzposition einer Person (5 - 7) auf einem Fahrzeugsitz (2, 3, Rücksitzbank 4) ausgebildet ist.

3. Einrichtung nach Anspruch 1 oder 2, **dadurch gekennzeichnet, dass** die Auswerteeinheit (22, 23) zur Ermittlung von Größen und/oder Gewichten der Personen (5 - 7) ausgebildet ist.

4. Einrichtung nach zumindest einem der vorhergehenden Ansprüche, **dadurch gekennzeichnet, dass** die Auswerteeinheit (22, 23) einen elektronischen Speicher (34) für verschiedene Sitzpositionen und für verschiedene Größen und Gewichte von Personen aufweist (5 - 7) und zum Vergleich der abgespeicherten Werte mit dem Bild der bildaufnehmenden Sensoreinheit (21, 24) ausgebildet ist.

5. Einrichtung nach zumindest einem der vorhergehenden Ansprüche, **dadurch gekennzeichnet, dass** die bildaufnehmende Sensoreinheit (21, 24) zur Anordnung hinter einem halbdurchlässig gestalteten Innenspiegel (20) des Kraftfahrzeuges vorgesehen ist.

6. Einrichtung nach zumindest einem der vorhergehenden Ansprüche, **dadurch gekennzeichnet, dass** die Auswerteeinheit (23) eine zum Verknüpfen der Signale der bildaufnehmende Sensoreinheit (24) und eines Crashsensors (31) ausgebildete Recheneinheit (35) aufweist.

7. Einrichtung nach zumindest einem der vorhergehenden Ansprüche, **dadurch gekennzeichnet, dass** die Auswerteeinheit (22, 23) eine zum Verknüpfen der Signale der bildaufnehmenden Sensoreinheit (21, 24) und eines Glasbruchsensors (29) und/oder eines Türsensors (18, 19) ausgebildete Recheneinheit (36) aufweist.

8. Einrichtung nach zumindest einem der vorhergehenden Ansprüche, **dadurch gekennzeichnet, dass** die bildaufnehmende Sensoreinheit (21, 24) zur Erzeugung jeweils eines Einzelbildes nach einem vorgesehenen Zeitintervall ausgebildet ist.

9. Einrichtung nach zumindest einem der vorhergehenden Ansprüche, **dadurch gekennzeichnet, dass** die Auswerteeinheit (22, 23) durch eine Änderung der Signale der bildaufnehmenden Sensoreinheit (21, 24) aktivierbar ist.

## Claims

1. Device for actuating electronic equipment in a motor vehicle having a sensor element, designed as a picture-taking sensor unit, for generating electronic signals as a function of positions of persons and/or objects in a passenger compartment of the motor vehicle, and having an evaluation unit, designed to recognize pictures of the picture-taking sensor unit (21, 24), for evaluating the electronic signals, and which drives a plurality of electronic devices (25-27) **characterized in that** a single picture-taking sensor unit (21, 24) virtually completely senses the interior of the motor vehicle, the evaluation unit (22, 23) distinguishing both persons and objects as such by means of an image-processing unit (33), and the picture-taking sensor unit (21, 24) being provided for arrangement in a region which adjoins an interior mirror (20).

2. Device according to Claim 1, **characterized in that** the evaluation unit (22, 23) is designed to recognize the sitting position of a person (5 - 7) on a vehicle seat (2, 3, rear bench seat 4).

3. Device according to Claim 1 or 2, **characterized in that** the evaluation unit (22, 23) is designed to sense sizes and/or weights of the persons (5 - 7).

4. Device according to at least one of the preceding claims, **characterized in that** the evaluation unit (22, 23) has an electronic memory (34) for various sitting positions and for various sizes land weights of persons (5 - 7), and is designed to compare the stored values with the picture of the picture-taking sensor unit (21, 24).

5. Device according to at least one of the preceding claims, **characterized in that** the picture-taking sensor unit (21, 24) is provided for arrangement behind a translucent interior mirror (20) of the motor vehicle.

6. Device according to at least one of the preceding claims, **characterized in that** the evaluation unit (23) has an arithmetic unit (35) which is designed to link logically the signals of the picture-taking sensor unit (24) and of a crash sensor (31).

7. Device according to at least one of the preceding claims, **characterized in that** the evaluation unit (22, 23) has an arithmetic unit (36) which is designed to link logically the signals of the picture-taking sensor unit (21, 24) and of a glass breakage sensor (29) and/or of a door sensor (18, 19).

8. Device according to at least one of the preceding claims, **characterized in that** the picture-taking sensor unit (21, 24) is designed to generate; in each case, an individual picture after a time interval which is provided.

9. Device according to at least one of the preceding claims, **characterized in that** the evaluation unit (22, 23) can be activated as a result of a change in the signals of the picture-taking sensor unit (21, 24).

## Revendications

1. Dispositif de commande d'appareils électroniques dans un véhicule automobile, comprenant un élément capteur, qui est prévu sous forme d'une unité de capteur d'image, servant à produire des signaux électroniques en fonction de positions de personnes et/ou d'objets dans un espace intérieur du véhicule automobile, et une unité d'analyse qui est prévue pour le traitement d'images de l'unité de capteur d'image et sert à analyser les signaux électroniques, et qui commande plusieurs appareils électroniques (25 - 27), **caractérisé en ce qu'**une unité de capteur d'image (21, 24) unique couvre en détection sensiblement tout l'espace intérieur du véhicule automobile, tandis que, à la fois des personnes et des objets sont distingués en tant que tels au moyen d'une unité de traitement d'image (33) l'unité d'analyse (22, 23), et que l'unité de capteur d'image (21, 24) est prévue pour être disposée dans une zone voisine d'un rétroviseur intérieur (20).

2. Dispositif suivant la revendication 1, **caractérisé en ce que** l'unité d'analyse (22, 23) est prévue pour déterminer la position assise d'une personne (5 - 7) sur un siège de véhicule (2, 3, banquette arrière 4).

3. Dispositif suivant la revendication 1 ou 2, **caractérisé en ce que** l'unité d'analyse (22, 23) est prévue pour déterminer les tailles et/ou les poids des personnes (5 - 7).

4. Dispositif suivant au moins l'une des revendications précédentes, **caractérisé en ce que** l'unité d'analyse (22, 23) comprend une mémoire électronique (34) pour différentes positions assises et pour différents tailles et poids de personnes (5 - 7), et est prévue pour comparer des valeurs stockées en mémoire avec l'image de l'unité de capteur d'image (21, 24).

5. Dispositif suivant au moins l'une des revendications précédentes, **caractérisé en ce que** l'unité de capteur d'image (21, 24) est prévue pour être disposée derrière un rétroviseur intérieur (20), de conception semi-transparente, du véhicule automobile.

6. Dispositif suivant au moins l'une des revendications précédentes, **caractérisé en ce que** l'unité d'analyse (23) comprend une unité de calcul (35) prévue pour combiner logiquement les signaux de l'unité de capteur d'image (24) et d'un détecteur de collision (31).

7. Dispositif suivant au moins l'une des revendications précédentes, **caractérisé en ce que** l'unité d'analyse (22, 23) comprend une unité de calcul (36) prévue pour combiner logiquement les signaux de l'unité de capteur d'image (21, 24) et d'un détecteur de bris de verre (29) et/ou d'un détecteur de porte (18, 19).

8. Dispositif suivant au moins l'une des revendications précédentes, **caractérisé en ce que** l'unité de capteur d'image (21, 24) est prévue pour produire une image individuelle chaque fois après un intervalle de temps prédéterminé.

9. Dispositif suivant au moins l'une des revendications précédentes, **caractérisé en ce que** l'unité d'analyse (22, 23) peut être activée par une modification des signaux de l'unité de capteur d'image (21, 24).
